# EUROPÄISCHE PATENTSCHRIFT

(11) **EP 1 152 231 B1**
(45) Veröffentlichungstag und Bekanntmachung des Hinweises auf die Patenterteilung: **20.11.2019**
(21) Anmeldenummer: 01106081.1
(22) Anmeldetag: 13.03.2001
(51) Int. Cl.: G01L 9/06, G01L 19/00, G01L 9/00

(54) **Drucksensorvorrichtung**
Pressure sensing arrangement
Dispositif sensible à la pression

(30) Priorität: 06.05.2000 DE 10022124
(43) Veröffentlichungstag der Anmeldung: 07.11.2001
(73) Patentinhaber: WABCO GmbH, 30453 Hannover (DE)
(72) Erfinder: Gröger, Jens, 30449 Hannover (DE)
(74) Vertreter: Schrödter, Manfred

(56) Entgegenhaltungen:
- EP-A1- 0 890 830
- DE-A- 19 626 084
- DE-U- 29 602 711
- JP-A- S56 140 230
- JP-U- H0 716 133
- US-A- 4 276 533
- US-A- 4 683 758
- US-A- 5 623 102
- US-A- 5 783 750

## Beschreibung

Die Erfindung bezieht sich auf ein elektronische Steuergerät gemäß dem Oberbegriff des Patentanspruchs 1.

Derartige Steuergeräte bestehen grundsätzlich aus einem Gehäuse und aus einer im Gehäuse angeordneten Leiterplatte. Dabei kann das Gehäuse aus Metall (meist Aluminium) oder aus Kunststoff bestehen. Die Leiterplatte kann einseitig oder beidseitig mit elektronischen Bauelementen bestückt sein. Die Bauelemente können mit Anschlußdrähten in Durchstecktechnik versehen sein, oder mit SMD-Bauelementen, die direkt auf die Oberfläche der Leiterplatte gelötet werden.

Eine besondere Art eines derartigen Steuergerätes wird als Mechatronik bezeichnet. Hierbei werden nicht nur elektrische Eingangsgrößen, sondern auch mechanische Eingangsgrößen verarbeitet. Eine solche mechanische Eingangsgröße kann z. B. ein Druck (insbesondere Druckluft) sein.

Hierzu ist es bekannt, daß die Leiterplatte neben anderen elektronischen Bauelementen auch mit einem oder mehreren Drucksensoren bestückt ist (DE 29 602 711 U1).

Dabei ist der Drucksensor als SMD-Bauteil bzw. als IC ausgebildet. Dieses besteht aus einem quaderförmigen Kunststoffgehäuse mit Anschlußbeinen, in welches der eigentliche Drucksensor auf Halbleiterbasis eingegossen ist. Zur Druckzuführung dient eine im Gehäuse des Drucksensors befindliche Bohrung. Daraus folgt, daß das Gehäuse, in welchem der bekannte Drucksensor sowie weitere elektronische Bauteile eingebaut sind, insgesamt mit dem zu messenden Druck beaufschlagt werden muß. Dies bedeutet aber, insbesondere bei höheren Drücken, daß die Gehäusewände eine erhöhte Wandfestigkeit haben müssen, und der Deckel des Gehäuses druckdicht abgedichtet sein muß. Weiterhin müssen die weiteren elektronischen Bauteile ebenfalls druckfest ausgeführt sein.

Aus der PS US 5,783,750 ist ein Halbleitersensor bekannt, welcher auf einer Leiterplatte befestigt ist und dessen Anschlüsse ebenfalls mit dieser Leiterplatte verbunden sind. Der Sensor kann dabei als Drucksensor ausgebildet sein. Über dem Sensor befindet sich eine Kunststoffkappe, die mit einem elastischem O-Ring gegen die Leiterplatte abgedichtet ist. Zur Druckzufuhr zum Drucksensor befindet sich in der Kunststoffkappe eine Bohrung.

Aus der PS US 4,276,533 ist weiter ein Drucksensor bekannt, der ebenfalls von einer Kappe mit einem angeschlossenen Druckzuführungsrohr umschlossen ist. Hierbei ist die Kappe nicht direkt auf der Leiterplatte, sondern auf einer zwischenliegenden Glasschicht mittels eines Bondingmaterials befestigt.

In den Dokumenten JP H0716133 U, EP 0890830 A1 und JP 56140230 A sind jeweils Drucksensoren offenbart aber nicht Steuergeräte mit einem Gehäuse, einem Deckel und mindestens einer im Deckel angeordneten Leiterplatte.

Der Erfindung liegt die Aufgabe zugrunde, eine Druckzufuhr zu einem auf einer Leiterplatte befindlichen, als IC ausgebildeten Drucksensor anzugeben, bei welchem das Elektronikgehäuse und die übrigen elektronischen Bauelemente nicht druckfest sein müssen.

Diese Aufgabe wird durch die im Patentanspruch 1 enthaltene Erfindung gelöst. Die Unteransprüche enthalten zweckmäßige Weiterbildungen.

Die Erfindung wird im folgenden anhand einer Zeichnung näher erläutert.

Die Fig. 1 zeigt ein elektronisches Steuergerät mit einem Gehäuse und einem Deckel, welches eine Leiterplatte mit einem Drucksensor enthält.

Die Fig. 2 zeigt den Deckel eines weiteren elektronischen Steuergerätes mit einer eingeklebten Heat-Sink-Leiterplatte.

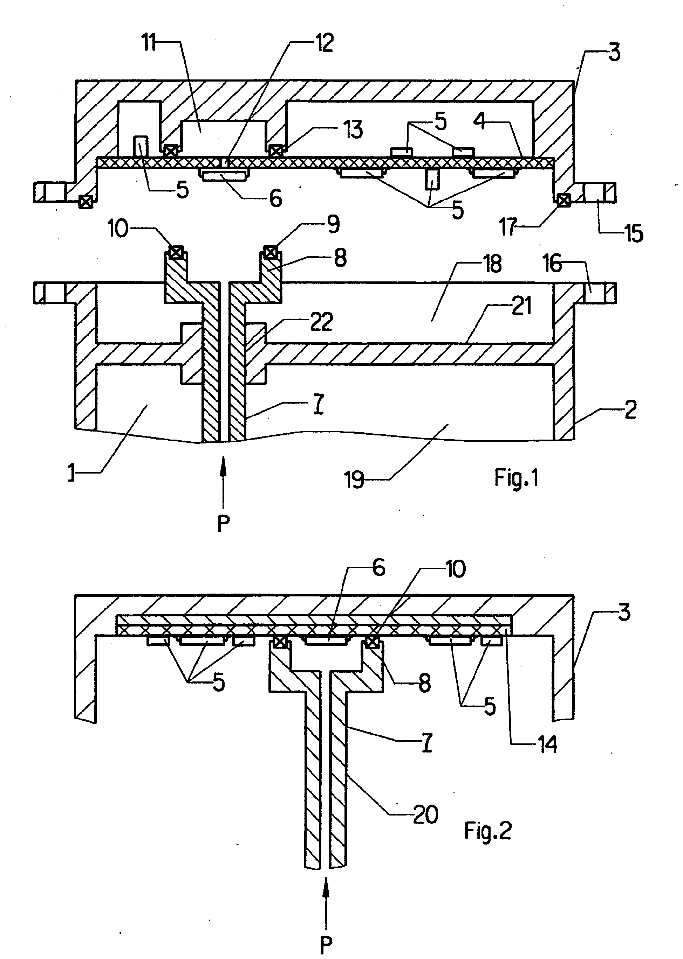

In der Fig. 1 ist ein elektronisches Steuergerät (1) dargestellt, welches aus einem Gehäuse (2) und einem Deckel (3) besteht. Der Deckel (3) ist auf das Gehäuse (2) aufschraubbar. Hierzu sind Laschen (15, 16) vorgesehen, wobei die Lasche (16) eine Gewindebohrung enthält. Im zusammengeschraubten Zustand von Gehäuse (2) und Deckel (3) dient eine umlaufende Dichtung (17) zum Schutz des Gehäuseinnenraums (18) gegen das Eindringen von Verschmutzungen.

Das Gehäuse (2) und der Deckel (3) können aus Metall (Stahl oder Aluminium) oder aus Kunststoff hergestellt sein.

Das Gehäuse (2) hat unten einen weiteren Raum (19), in welchem sich beispielsweise eine Ventileinrichtung befinden kann (nicht dargestellt). Die Gehäuseteile (18, 19) sind durch einen Gehäuseboden (21) voneinander druckdicht abgetrennt.

Der Deckel (3) des Gehäuses (2) enthält eine Leiterplatte (4) üblicher Bauart, welche mit elektronischen Bauelementen (5) bestückt ist. Die Leiterplatte (4) kann mehrlagig ausgebildet sein. Die Bauelemente (5) können entweder in konventioneller Bauart mit durchsteckbaren Anschlußdrähten, oder als SMD-Bauelemente ausgebildet sein. Die Leiterplatte (4) kann beidseitig bestückt sein.

Neben den o. g. Bauelementen (5) ist die Leiterplatte (4) mit einem Drucksensor (6) bestückt, welcher wie die übrigen Bauteile (5) entweder als konventionelles Bauteil, oder als SMD-Bauteil ausgebildet sein kann.

Zur Druckzufuhr zum Drucksensor (6) im zusammengebauten Zustand von Gehäuse (2) und Deckel (3) dient ein Schnorchel (7), welcher in einer Bohrung (22) des Gehäusebodens (21) eingeklebt ist. Der Schnorchel (7) besteht aus einem rohrförmigen unteren Teil (20) (siehe Fig. 2) sowie einem topfförmig aufgeweiteten oberen Teil (8).

Im zusammengebauten Zustand von Gehäuse (2) und Deckel (3) umschließt der obere Teil (8) des Schnorchels (7) den Drucksensor (6), wobei der Rand (9) des Schnorchels (7) mit einem Dichtring (10), welcher auf der Leiterplatte (4) aufliegt, abgedichtet ist.

Die Druckzufuhr zum Drucksensor (6) erfolgt durch den rohrförmigen unteren Teil (20) des Schnorchels (7), welcher an einen Druckraum mit dem zu messenden Druck (P) angeschlossen ist. Hierbei kann es sich um einen Druckraum eines im unteren Gehäuseteil (19) eingebauten Ventils handeln.

Um eine gute Abdichtung des Dichtringes (10) gegen die Leiterplatte (4) zu erzielen, kann die Kupferbeschichtung der Leiterplatte (4) im Bereich der Dichtung (10) vorteilhaft stehengelassen sein. In diesem Fall muß die Leiterplatte (4) mehrschichtig ausgebildet sein, und die elektrischen Anschlüsse für den Drucksensor (6) über Leiterbahnen im Inneren der Leiterplatte (4) erfolgen.

Auf der dem Schnorchel (7) gegenüberliegenden Seite der Leiterplatte (4) ist zweckmäßig ein Druckausgleichsraum (11) angeordnet. Dieser hat die gleiche Querschnittsfläche wie das obere Teil (8) des Schnorchels (7). Zur Belüftung des Druckausgleichsraums (11) dient eine Druckausgleichsbohrung (12), welche im Bereich des Drucksensors (6) die Platine (4) durchdringt.

Zur Erhöhung der Druckdichtigkeit der Druckausgleichsbohrung (12) kann diese durchmetallisiert sein. Das bedeutet, daß die Wand der Bohrung mit Metall bzw. Lötzinn beschichtet ist. Dies verhindert ein Eindringen des Druckmittels in die Leiterplatte (4).

Der Druckausgleichsraum (11) ist mit einem weiteren Dichtring (13) gegen die Leiterplatte (4) abgedichtet.

Zweck des Druckausgleichsraums (11) mit der Bohrung (12) ist es, vor und hinter der Platine (4) den gleichen Druck zu erhalten. Hierdurch wird eine Durchbiegung der Platine (4) bei aufgesetztem Schnorchel (7) unter Druckbeaufschlagung vermieden.

Der Durchmesser des oberen Teils (8) des Schnorchels (7) kann rund oder eckig ausgeführt sein. Die Querschnittsfläche hängt von der Größe des Drucksensors (6) ab. Ein typischer Wert des Durchmessers beträgt 1 cm. Die maximale Druckbeaufschlagung (P) beträgt etwa 10 bis 12 bar.

Anstelle des weiteren Dichtrings (13) kann der Druckausgleichsraum (11) auch mittels einer druckdichten Klebung abgedichtet werden. Diese Ausführung wäre billiger als die Ausführung mit Dichtring.

Der Schnorchel (7) ragt mit seinem oberen Teil (8) soweit über das Gehäuse (2) hinaus, daß bei der Montage von Deckel (3) und Gehäuse (2) mittels der Schraubverbindung (15, 16) eine zuverlässige Abdichtung zwischen Schnorchel (7) und Leiterplatte (4) durch den Dichtring (10) erfolgt.

In der Fig. 2 ist eine weitere Ausführung des elektronischen Steuergerätes (1) dargestellt. Gezeichnet ist der Deckel (3), in welchem eine Leiterplatte (14) eingeklebt ist. Diese ist als Heat-Sink-Leiterplatte ausgebildet, was bedeutet, daß ihre Rückseite mit einem Alublech von etwa 1 mm Stärke abgedichtet ist, welches zur besseren Wärmeableitung dient. Die elektronischen Bauteile (5) sind demzufolge nur einseitig auf der Leiterplatte angelötet und als SMD-Bauelemente ausgebildet.

Da die Heat-Sink-Leiterplatte (14) in Verbindung mit dem Deckel (3) eine sehr hohe Biegesteifigkeit aufweist, ist hier ein rückwärtiger Druckausgleichsraum (11) nicht vorgesehen.

Der Schnorchel (7) kann, wie oben beschrieben, am Gehäuseboden (21) befestigt sein. Er kann aber auch mit seinem unteren Teil (20) an einer Seitenwand bzw. dem Rahmen des Gehäuses (2) angebracht sein. Falls das Gehäuse (2) aus Kunststoff besteht, kann der Schnorchel (7) z. B. mit seinem unteren Teil (20) am Rahmen des Gehäuses (2) angespritzt sein.

Zweckmäßig ist der Innenraum (18) des Gehäuses (2) nach außen belüftet, beispielsweise durch eine (nicht dargestellte) Bohrung. Dies verhindert die Bildung von Kondenswasser im Gehäuse (2) und hält weiterhin den Druck im Innenraum (18) auf Atmosphärendruck. Auf diese Weise wird ein sonst möglicher Druckanstieg im Innenraum (18) bei einer leichten Undichtigkeit zwischen Dichtring (10) und Leiterplatte (4, 14) verhindert.

Durch die erfindungsgemäße Lösung ist eine Vereinfachung bzw. Verbilligung des Aufbaus von Mechatroniken mit integrierten Drucksensoren möglich. Der Einsatz von teuren Drucksenor-Hybriden wird vermieden, und statt dessen die Verwendung von als SMD-Bauelement bzw. als IC ausgebildeten Drucksensoren ermöglicht. Durch die Abdichtung des Schnorchels (7) direkt auf der Leiterplatte (4, 14) ist die Anordnung unempfindlich gegenüber einem seitlichen Versatz bzw. seitlichen Toleranzen zwischen Gehäuse (2) und Deckel (3).

## Patentansprüche

1. Elektronisches Steuergerät (1) mit einem Gehäuse (2), einem Deckel (3) und mindestens einer im Deckel (3) angeordneten Leiterplatte (4, 14), die mit elektronischen Bauelementen (5) bestückt ist, von welchen mindestens eines ein Drucksensor (6) ist, **dadurch gekennzeichnet, daß** zur Druckzufuhr (P) zum Drucksensor (6) ein am Gehäuse (2) befestigter Schnorchel (7) vorgesehen ist, welcher beim Zusammenfügen von Gehäuse (2) und Deckel (3) mit seinem oberen Teil (8) den Drucksensor (6) umschließt und dessen Rand (9) gegen die Leiterplatte (4, 14) abdichtet.

2. Elektronisches Steuergerät nach Anspruch 1, **dadurch gekennzeichnet, daß** der Rand (9) des Schnorchels (7) mit einem Dichtring (10) versehen ist.

3. Elektronisches Steuergerät nach einem oder beiden der Ansprüche 1 und 2, **dadurch gekennzeichnet, daß** die Kupferbeschichtung der Leiterplatte (4, 14) im Bereich des Dichtrings (10) stehengelassen ist.

4. Elektronisches Steuergerät nach Anspruch 3, **dadurch gekennzeichnet, daß** die Leiterplatte (4, 14) mehrschichtig ausgebildet ist, und die elektrischen Anschlüsse für den Drucksensor (6) über Leiterbahnen im Inneren der Leiterplatte (4, 14) erfolgen.

5. Elektronisches Steuergerät nach einem oder mehreren der Ansprüche 1 bis 4, **dadurch gekennzeichnet, daß** auf der Rückseite der Leiterplatte (4) gegenüber dem Schnorchel (7) ein Druckausgleichsraum (11) mit gleicher Querschnittsfläche wie beim oberen Teil (8) des Schnorchels (7) vorgesehen ist.

6. Elektronisches Steuergerät nach Anspruch 5, **dadurch gekennzeichnet, daß** die Leiterplatte (4) im Bereich des Schnorchels (7) eine Druckausgleichsbohrung (12) aufweist.

7. Elektronisches Steuergerät nach Anspruch 6, **dadurch gekennzeichnet, daß** die Druckausgleichsbohrung (12) durchmetallisiert ist.

8. Elektronisches Steuergerät nach Anspruch 5 bis 7, **dadurch gekennzeichnet, daß** der Druckausgleichsraum (11) mit einem weiteren Dichtring (13) abgedichtet ist.

9. Elektronisches Steuergerät nach Anspruch 5 bis 7, **dadurch gekennzeichnet, daß** der Druckausgleichsraum (11) mittels einer druckdichten Klebung abgedichtet ist.

10. Elektronisches Steuergerät nach einem oder mehreren der Ansprüche 1 bis 9, **dadurch gekennzeichnet, daß** die Leiterplatte (4) beidseitig mit steckbaren Bauelementen (5) oder mit SMD-Bauelementen (5) bestückt ist.

11. Elektronisches Steuergerät nach Anspruch 1 bis 9, **dadurch gekennzeichnet, daß** die Leiterplatte (14) als Heat-Sink-Leiterplatte ausgebildet ist, und nur einseitig mit SMD-Bauelementen (5) bestückt ist.

12. Elektronisches Steuergerät nach Anspruch 11, **dadurch gekennzeichnet, daß** die Rückseite der Heat-Sink-Leiterplatte (14) mit der Innenseite des Deckels (3) durch eine Klebung verbunden ist.

13. Elektronisches Steuergerät nach einem oder mehreren der Ansprüche 1 bis 12, **dadurch gekennzeichnet, daß** der Schnorchel (7) in eine Bohrung (22) eines Gehäusebodens (21) eingeklebt ist.

14. Elektronisches Steuergerät nach einem oder mehreren der Ansprüche 1 bis 12, **dadurch gekennzeichnet, daß** der Schnorchel (7) mit seinem unteren Teil (20) an einer Seitenwand des Gehäuses (2) angespitzt ist.

15. Elektronisches Steuergerät nach einem oder mehreren der Ansprüche 1 bis 14, **dadurch gekennzeichnet, daß** der Deckel (3) auf das Gehäuse (2) aufschraubbar ist.

16. Elektronisches Steuergerät nach einem oder mehreren der Ansprüche 1 bis 15, **dadurch gekennzeichnet, daß** der Innenraum (18) des Gehäuses (2) nach außen belüftet ist.

## Claims

1. Electronic control unit (1) having a housing (2), a cover (3) and at least one printed circuit board (4, 14) arranged in the cover (3) and populated with electronic components (5), at least one of which is a pressure sensor (6), **characterized in that** for pressure supply (P) to the pressure sensor (6), a snorkel (7) secured to the housing (2) is provided, the upper part (8) of which snorkel encloses the pressure sensor (6) and housing (2) and cover (3) by joining together, and the edge (9) of which snorkel seals against the printed circuit board (4, 14).

2. Electronic control unit according to Claim 1, **characterized in that** the edge (9) of the snorkel (7) is provided with a sealing ring (10).

3. Electronic control unit according to one or both of Claims 1 and 2, **characterized in that** the copper coating of the printed circuit board (4, 14) is left in the region of the sealing ring (10) .

4. Electronic control unit according to Claim 3, **characterized in that** the printed circuit board (4, 14) is embodied in a multilayered fashion, and the electrical connections for the pressure sensor (6) are implemented by way of conductor tracks in the interior of the printed circuit board (4, 14).

5. Electronic control unit according to one or more of Claims 1 to 4, **characterized in that** on the rear side of the printed circuit board (4) opposite the snorkel (7), provision is made of a pressure equalization space (11) having the same cross-sectional area as in the case of the upper part (8) of the snorkel (7).

6. Electronic control unit according to Claim 5, **characterized in that** the printed circuit board (4) has a pressure equalization hole (12) in the region of the snorkel (7).

7. Electronic control unit according to Claim 6, **characterized in that** the pressure equalization hole (12) is plated-through.

8. Electronic control unit according to Claims 5 to 7, **characterized in that** the pressure equalization space (11) is sealed with a further sealing ring (13) .

9. Electronic control unit according to Claims 5 to 7, **characterized in that** the pressure equalization space (11) is sealed by means of a pressure-tight adhesive bond.

10. Electronic control unit according to one or more of Claims 1 to 9, **characterized in that** the printed circuit board (4) is populated on both sides with pluggable components (5) or with SMD components (5).

11. Electronic control unit according to Claims 1 to 9, **characterized in that** the printed circuit board (14) is embodied as a heat sink printed circuit board, and is populated with SMD components (5) only on one side.

12. Electronic control unit according to Claim 11, **characterized in that** the rear side of the heat sink printed circuit board (14) is connected to the inner side of the cover (3) by an adhesive bond.

13. Electronic control unit according to one or more of Claims 1 to 12, **characterized in that** the snorkel (7) is adhesively bonded into a hole (22) in a housing base (21).

14. Electronic control unit according to one or more of Claims 1 to 12, **characterized in that** the snorkel (7) is sharpened by its lower part (20) on a side wall of the housing (2).

15. Electronic control unit according to one or more of Claims 1 to 14, **characterized in that** the cover (3) is able to be screwed onto the housing (2).

16. Electronic control unit according to one or more of Claims 1 to 15, **characterized in that** the interior (18) of the housing (2) is ventilated towards the outside.

## Revendications

1. Appareil de commande électronique (1) avec un boîtier (2), un couvercle (3) et au moins une carte de circuits imprimés (4, 14) disposée dans le couvercle (3), qui est dotée de composants électroniques (5), parmi lesquels au moins un est un capteur de pression (6), **caractérisé en ce qu'**il est prévu pour l'amenée de la pression (P) au capteur de pression (6) un schnorchel (7) fixé au boîtier (2), qui lors de l'assemblage du boîtier (2) et du couvercle (3) entoure avec sa partie supérieure le capteur de pression (6) et étanchéifie son bord (9) contre la carte de circuits imprimés (4, 14).

2. Appareil de commande électronique selon la revendication 1, **caractérisé en ce que** le bord (9) du schnorchel (7) est muni d'un anneau d'étanchéité (10).

3. Appareil de commande électronique selon une ou les deux des revendications 1 et 2, **caractérisé en ce que** le revêtement de cuivre de la carte de circuits imprimés (4, 14) est laissé en place dans la région de l'anneau d'étanchéité (10).

4. Appareil de commande électronique selon la revendication 3, **caractérisé en ce que** la carte de circuits imprimés (4, 14) est réalisée à plusieurs couches, et les raccordements électriques pour le capteur de pression (6) sont effectués par des voies conductrices à l'intérieur de la carte de circuits imprimés (4, 14).

5. Appareil de commande électronique selon une ou plusieurs des revendications 1 à 4, **caractérisé en ce qu'**il est prévu sur la face arrière de la carte de circuits imprimé (4) en face du schnorchel (7) une chambre d'équilibrage de pression (11) ayant la même aire de section transversale que dans la partie supérieure (8) du schnorchel (7).

6. Appareil de commande électronique selon la revendication 5, **caractérisé en ce que** la carte de circuits imprimés (4) présente dans la région du schnorchel (7) un trou d'équilibrage de pression (12).

7. Appareil de commande électronique selon la revendication 6, **caractérisé en ce que** le trou d'équilibrage de pression (12) est métallisé sur l'épaisseur.

8. Appareil de commande électronique selon une revendication 5 à 7, **caractérisé en ce que** la chambre d'équilibrage de pression (11) est rendue étanche avec un autre anneau d'étanchéité (13).

9. Appareil de commande électronique selon une revendication 5 à 7, **caractérisé en ce que** la chambre d'équilibrage de pression (11) est rendue étanche au moyen d'un collage étanche à la pression.

10. Appareil de commande électronique selon une ou plusieurs des revendications 1 à 9, **caractérisé en ce que** la carte de circuits imprimés (4) est dotée sur les deux faces de composants enfichables (5) ou de composants SMD (5).

11. Appareil de commande électronique selon une revendication 1 à 9, **caractérisé en ce que** la carte de circuits imprimés (14) est formée par une carte de circuits imprimés Heat Sink, et n'est dotée de composants SMD (5) que sur une face.

12. Appareil de commande électronique selon la revendication 11, **caractérisé en ce que** la face arrière de la carte de circuits imprimés Heat Sink (14) est assemblée au côté intérieur du couvercle (3) par un collage.

13. Appareil de commande électronique selon une ou plusieurs des revendications 1 à 12, **caractérisé en ce que** le schnorchel (7) est collé dans un trou (22) percé dans un fond de boîtier (21).

14. Appareil de commande électronique selon une ou plusieurs des revendications 1 à 12, **caractérisé en ce que** le schnorchel (7) est piqué avec sa partie inférieure (20) sur une paroi latérale du boîtier (2).

15. Appareil de commande électronique selon une ou plusieurs des revendications 1 à 14, **caractérisé en ce que** le couvercle (3) peut être vissé sur le boîtier (2) .

16. Appareil de commande électronique selon une ou plusieurs des revendications 1 à 15, **caractérisé en ce que** l'espace intérieur (18) du boîtier (2) est ventilé vers l'extérieur.
